# FASCICULE DE BREVET EUROPEEN

(11) **EP 3 540 859 B1**
(45) Date de publication et mention de la délivrance du brevet: **03.05.2023**
(21) Numéro de dépôt: 19162380.0
(22) Date de dépôt: 12.03.2019
(51) Int. Cl.: H01R 9/05, H01R 43/24, H01R 13/52, H01R 13/58, B29C 45/14, B29C 45/77

(54) **ENSEMBLE DE CONNEXION ÉLECTRIQUE À CONNECTEUR ÉLECTRIQUE MONTÉ ET SURMOULÉ SUR UN CÂBLE ÉLECTRIQUE, PROCÉDÉ DE RÉALISATION ASSOCIÉ**
ELEKTRISCHE ANSCHLUSSEINHEIT MIT ELEKTRISCHEM VERBINDUNGSSTECKER, DER AUF EIN ELEKTRISCHES KABEL MONTIERT UND AUFGEFORMT IST, UND ENTSPRECHENDES HERSTELLUNGSVERFAHREN
ELECTRICAL CONNECTION ASSEMBLY WITH ELECTRICAL CONNECTOR MOUNTED AND OVERMOULDED ON AN ELECTRICAL CABLE, ASSOCIATED MANUFACTURING METHOD

(30) Priorité: 16.03.2018 FR 1852294
(43) Date de publication de la demande: 18.09.2019
(73) Titulaire: RAYDIALL, 38500 Voiron (FR)
(72) Inventeur: ANNEQUIN, Sébastien, 38500 Saint Nicolas De Macherin (FR); BRUNET, Adrien, 38360 Sassenage (FR)
(74) Mandataire: Cabinet Nony

(56) Documents cités:
- EP-A1- 0 207 322
- EP-A1- 0 818 854
- WO-A1-02/16472
- WO-A1-2013/022422
- US-A- 5 021 010
- US-A- 5 833 495

## Description

### Domaine technique

La présente invention concerne un ensemble de connexion électrique comprenant un connecteur électrique monté et surmoulé sur un câble électrique, ainsi que le procédé de réalisation associé.

Elle vise particulièrement à réduire le coût et diminuer les dimensions de ce type d'ensemble de connexion.

L'invention répond toujours aux contraintes mécaniques et exigences environnementales liées aux normes USCAR et ISO relatives aux connecteurs et s'applique ainsi plus particulièrement aux connecteurs coaxiaux destinés au domaine de l'automobile tels que les connecteurs coaxiaux FAKRA, USCAR. Elle s'applique aussi aux connecteurs avec paires torsadées tels que les connecteurs HSD (acronyme anglo-saxon pour « High Speed Data ») ou HMTD (acronyme anglo-saxon pour « High speed Modular Twisted pair Data »).

L'invention permet en outre de fournir des connecteurs électriques qui respectent le codage par couleurs et système de détrompage pour les applications du domaine de l'automobile, selon lequel une combinaison de couleurs permet une connexion unique entre un connecteur de type mâle et un connecteur de type femelle pour une même nature de connexion (protocole GPS, sans fil comme le Bluetooth^{®}, diffusion audio numérique (en anglais « Digital Audio Broadcasting » d'acronyme DAB, Wifi, ADAS, ...).

### Etat de l'art

Un connecteur électrique comprend une extrémité de laquelle débouche un câble électrique sur lequel il est monté.

Le brevet EP1653574 B1 au nom de la Demanderesse divulgue un montage avantageux par sertissage entre d'une part le conducteur central d'un câble électrique coaxial et le contact central d'un connecteur coaxial et d'autre part entre contact extérieur et respectivement la tresse métallique et la gaine du câble.

Plusieurs solutions sont connues pour réaliser la protection mécanique et l'étanchéité entre connecteur coaxial et câble coaxial sur lequel le connecteur est monté, tout en répondant aux contraintes mécaniques et environnementales liées aux applications de l'automobile.

Le brevet US7510433 B2 décrit une première solution de protection mécanique et d'étanchéité pour un connecteur droit. On a reproduit en figure 1, un connecteur coaxial 3 tel que décrit dans ce brevet. Le boitier isolant électrique 30 de ce connecteur 3 loge et maintien un contact extérieur 31 sous la forme d'un tube sur lequel est serti un manchon 32 de sertissage avec la tresse métallique du câble coaxial (non représenté). A l'intérieur du boitier 30, un premier manchon d'étanchéité 4 entoure complètement le contact extérieur 31. Deux joints toriques d'étanchéité 5 agencés respectivement en bout et autour du contact extérieur 31 et autour du premier manchon d'étanchéité 4 viennent compléter l'étanchéité obtenue par ce dernier à l'intérieur du boitier 30. Un joint annulaire 6 accroché par le manchon de sertissage 32 vient compléter l'étanchéité autour de l'extrémité du câble coaxial. Enfin, l'extrémité arrière du boitier 30 est prolongée d'une partie tubulaire 33 dans laquelle des languettes 34 tournées radialement vers l'intérieur viennent verrouiller par encliquetage élastique un tube de protection 7 de forme ondulée qui entoure le câble coaxial et sert ainsi de protection mécanique à ce dernier.

Une deuxième solution est par exemple décrite dans la demande de brevet US2018/0034172 relative à un connecteur coudé à 90°. On a reproduit en figure 2, un ensemble de connexion coaxial 1 tel que décrit dans cette demande. Le câble coaxial 2 est logé à l'intérieur de la partie de boitier 30 du connecteur 3 qui s'étend selon un axe longitudinal X, à 90° de l'autre partie coudée du boitier 30 du connecteur. Sans entrer dans les détails de connexion, le conducteur extérieur 21 du câble coaxial 2 qui forme un blindage est en contact périphérique avec le contact extérieur 31 du connecteur 2, tandis que le conducteur central 22 du câble 2 est en contact périphérique avec le contact central 35 du connecteur dans sa partie selon l'axe X. La protection mécanique du câble 2 et l'étanchéité à l'extrémité du boitier 30 du connecteur 3 est ici assurée par un joint annulaire 6 agencé à l'intérieur du boitier autour de la gaine isolante extérieure 20 du câble 2. Un capot de protection 8 qui est fixé au boitier 30 par encliquetage vient refermer l'espace à l'arrière du joint 6.

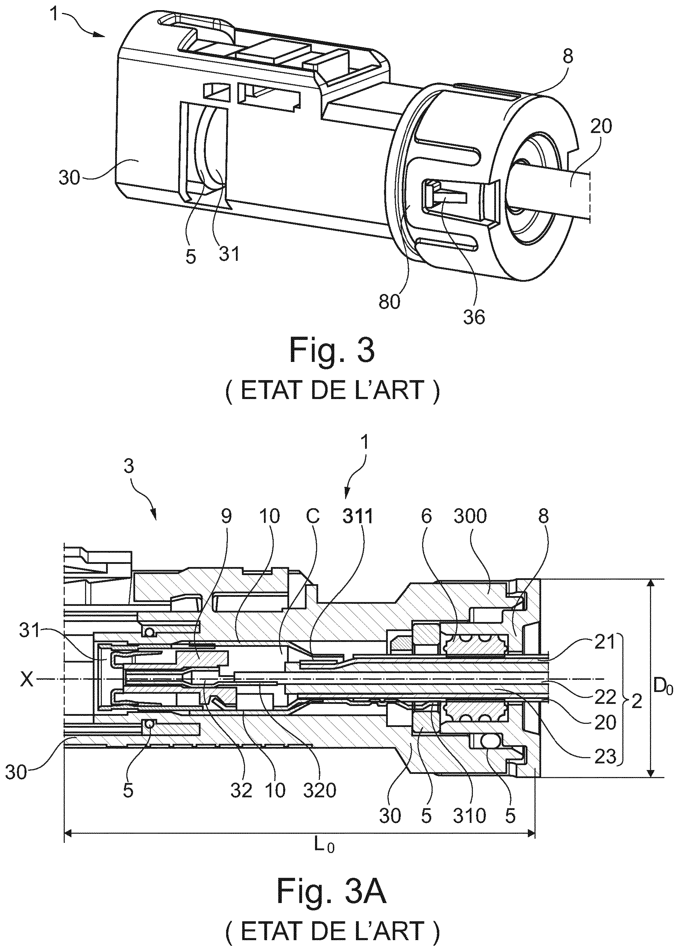

Une solution analogue est montrée sur un connecteur droit aux figures 3 et 3A. Sur la figure 3A, on voit en premier lieu en détail le montage du connecteur 3 d'axe longitudinal X sur le câble coaxial 2.

Le contact extérieur 31 est monté dans le boitier 30 avec une portion 310 sertie autour de la gaine extérieure 20 du câble coaxial 2. En outre, une portion 311 du contact extérieur 31 est sertie autour de la tresse métallique 21 de blindage du câble 2 qui entoure le diélectrique 23 de ce dernier.

Le contact central 32 est monté à l'intérieur du contact extérieur 31 avec interposition d'un corps isolant électrique 9 et avec une portion 320 sertie autour de l'extrémité libre dénudée du conducteur central 22 du câble coaxial 2.

A l'intérieur du boitier 30, une férule métallique 10 entoure, le contact central 32 et le contact extérieur 31 selon l'axe X, entre la partie tubulaire du contact extérieur 31 et sa portion 311 sertie autour de la tresse métallique 21 en formant une cavité C sensiblement fermée.

Pour assurer la protection mécanique et l'étanchéité sur la partie arrière 300 du boitier 30, un capot de protection 8 ferme la partie arrière 300 du boitier 30 autour du câble 2.

Plus précisément, comme visible en figure 3, le capot de protection 8 est encliqueté sur la partie arrière 300 du boitier 30 au moyen de pattes élastiques 80 qui viennent s'encliqueter autour de saillies 36 ménagées à cet effet à la périphérie extérieure de la partie arrière 300 du boitier 30.

Un joint annulaire 6 est emmanché autour de la gaine 20 du câble 2 et garantit l'étanchéité entre le capot et la gaine du câble 2.

Pour parfaire l'étanchéité entre le boitier 30 et le capot 8, deux joints annulaires supplémentaires 5 sont agencés l'un en bout de capot en appui contre un épaulement intérieur du boitier et l'autre autour de la partie tubulaire du capot 8.

On comprend aisément à la lecture de ce qui précède que les solutions existantes impliquent la mise en oeuvre de nombreuses pièces supplémentaires pour réaliser la protection mécanique et/ou l'étanchéité entre câble coaxial et connecteur coaxial sur lequel il est monté.

En outre, ces solutions impliquent un coût important et un encombrement en sus du connecteur proprement dit qui peut ne pas être négligeable.

US5833495 et US5021010 divulguent chacun un ensemble de connexion à connecteur électrique monté sur un câble électrique selon le préambule de la revendication 1.

Il existe donc un besoin pour améliorer les ensembles de connexion à connecteur électrique monté sur un câble électrique, en particulier à connecteur coaxial monté sur un câble coaxial, afin de réduire le nombre de pièces nécessaires à l'étanchéité et/ou la protection mécanique et de réduire le coût et l'encombrement afférents.

Le but de l'invention est de répondre au moins en partie à ce besoin.

### Exposé de l'invention

Pour ce faire, l'invention a pour objet un ensemble de connexion électrique selon la revendication 1.

Le câble peut comprendre un diélectrique entourant chaque conducteur central, un conducteur extérieur de masse, avec éventuellement un blindage électromagnétique additionnel entourant le diélectrique, la gaine entourant alors le conducteur extérieur avec le cas échéant le blindage.

Le boitier peut être isolant électrique ou conducteur électrique.

Selon un mode de réalisation, le câble et le connecteur sont coaxiaux.

Selon un autre mode de réalisation, le câble est constitué d'une ou plusieurs paires de conducteurs centraux torsadés.

De préférence, la cavité étant exempte de la matière de la jonction surmoulée.

La partie du boitier peut comprendre une ou plusieurs ouvertures débouchantes remplies complètement par la jonction surmoulée.

Selon un mode de réalisation avantageux, l'ensemble comprend:
- le câble électrique comprend autour d'au moins un conducteur central, un diélectrique et une tresse métallique de blindage entourant le diélectrique et entourée de la gaine extérieure ;
- le contact extérieur comprend une portion sertie autour de la gaine extérieure du câble et/ou une portion sertie autour de la tresse métallique du câble;
- l'enveloppe entoure le contact central et le contact extérieur également sur la longueur de la portion sertie autour de la tresse métallique.

Le contact extérieur peut être formé par une seule et même pièce obtenue par découpage-roulage d'une bande métallique.

De même, l'enveloppe peut être formée par une seule et même pièce (férule) obtenue par découpage-roulage d'une bande métallique.

Selon un premier mode de réalisation avantageux:
- le boitier du connecteur est constitué par une seule pièce de forme droite allongée selon l'axe longitudinal (X) ;
- la jonction est surmoulée entre l'enveloppe et la partie arrière du boitier et entre la partie arrière de boitier et une partie de la gaine du câble coaxial en étant répartie autour de cette dernière et de la partie arrière du boitier.

Selon un deuxième mode de réalisation avantageux :
- le connecteur est de forme coudée selon un coude entre l'axe longitudinal (X) et un autre axe longitudinal (Y), de préférence à 90° l'un de l'autre ;
- le boitier du connecteur comprenant :
   - un boitier de coding s'étendant selon l'autre axe longitudinal (Y),
   - un manchon coudé selon la même forme coudée que celle du connecteur, le manchon étant assemblé avec le corps de boitier, le manchon logeant l'enveloppe;
- la jonction est surmoulée entre l'enveloppe et l'espace intérieur du manchon en fermant celui-ci autour d'une partie de la gaine du câble électrique.

Selon ce deuxième mode, le manchon peut être assemblé avec le boitier de coding selon une liaison pivot autour de l'autre axe (Y).

L'invention a également pour objet un procédé de réalisation d'un ensemble de connexion électrique selon la revendication 12.

De préférence, l'étape b/ est réalisée de sorte que la cavité soit exempte de la matière polymère de surmoulage.

De préférence encore, l'étape b/ étant réalisée comme suit :
b1/ injection initiale de la matière polymère selon un remplissage partiel du volume final définissant la jonction surmoulée ;
b2/ arrêt de l'injection selon b1/ ;
b3/ injection finale de la matière polymère de sorte à compléter le volume final définissant la jonction surmoulée.

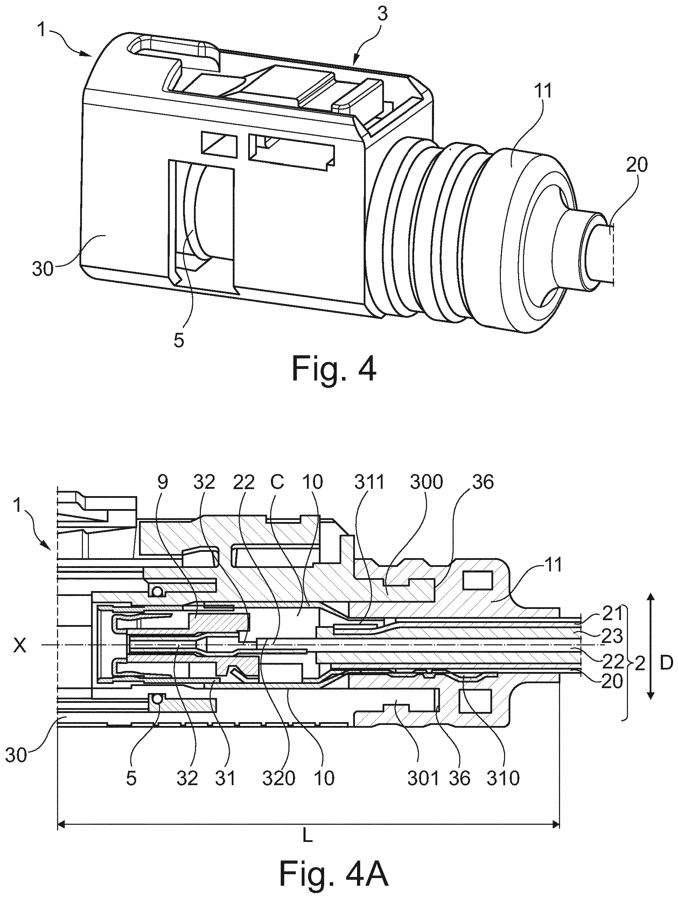

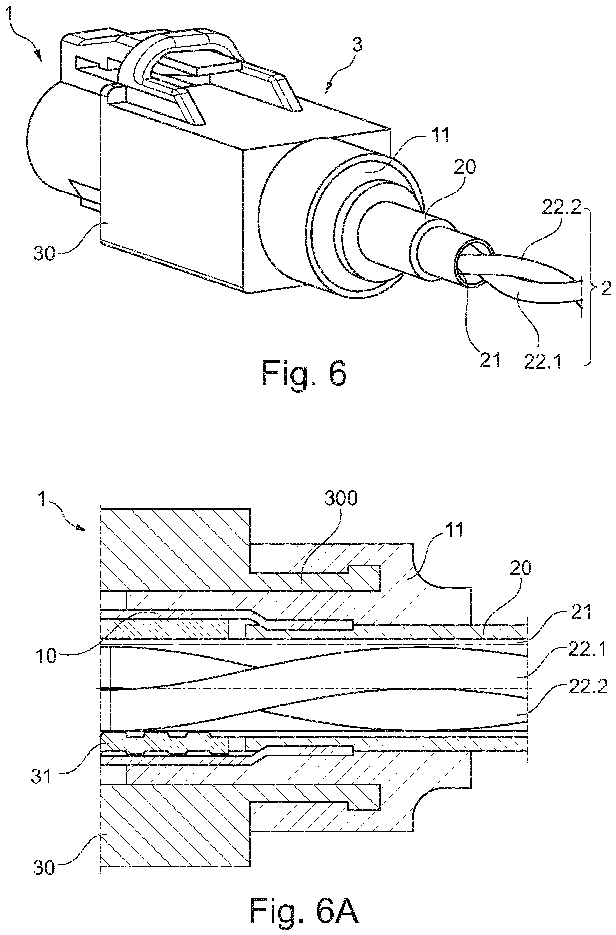

L'enveloppe conductrice, typiquement métallique, peut se présenter sous la forme d'une férule découpée roulée comme sur les figures 4A, 5B et 7C (exemple d'ensemble avec connecteur relié à câble coaxial). Cette enveloppe peut aussi être constituée d'une coque ou deux demi-coques comme dans sur la figure 6A (exemple d'ensemble avec connecteur relier à câble à paires torsadées) ou comme dans la demande de brevet FR 17 61704 déposée le 6 décembre 2017 par la Demanderesse.

Ainsi, l'invention consiste essentiellement à remplacer toutes les pièces de protection mécanique (tube ondulé, capot) et d'étanchéité (joints annulaires) qui sont rapportés mécaniquement dans les solutions de connexion électrique, notamment de connexion coaxiale, selon l'état de l'art, par une jonction surmoulée directement sur l'enveloppe conductrice (férule, coque, ou deux demi-coques), en partie à l'intérieur du boitier de connecteur et autour de la partie de gaine extérieure du câble qui est à proximité du boitier.

L'enveloppe, intérieure au boitier et agencée autour des contacts extérieur et central, permet de limiter considérablement voire parfaitement les fuites des signaux HF susceptibles d'être transmis par le câble coaxial dans le connecteur coaxial.

Ces fuites sont inhérentes au dénudage de l'extrémité du conducteur central du câble coaxial pour lui permettre d'être sertie autour du contact central du connecteur.

Après avoir analysé les différentes solutions de l'art antérieur pour la protection mécanique et l'étanchéité, les inventeurs ont pensé à réaliser une jonction par surmoulage.

Et devant le risque perçu d'intrusion de la matière de surmoulage à l'intérieur du connecteur par les interstices naturels introduits, plus particulièrement quand le procédé d'obtention de l'enveloppe (férule) est par découpage/roulage, ils ont pensé judicieusement à se servir de l'enveloppe comme barrière mécanique à la matière injectée et à sélectionner un procédé de surmoulage à basse pression qui permet de bien maîtriser les conditions de surmoulage et donc au final les espaces remplis et non remplis par la matière.

Grâce à l'invention, on réduit donc le coût d'un ensemble coaxial comprenant un câble coaxial et un connecteur monté sur le câble, car on supprime le coût de réalisation des différentes pièces d'étanchéité et de rétention de câble et de leur mise en place.

De plus, le procédé de surmoulage permet d'accommoder plusieurs diamètres de câbles ou modèles de connecteurs sans addition de pièces spécifiques et/ou modification des composants fonctionnels. A titre d'exemple, les câbles peuvent être de type RKT de 3,2mm de diamètre, ou encore de type RG174 de 2,6mm de diamètre.

En outre, le fait d'implanter une jonction surmoulée en tant qu'élément unique d'étanchéité et de rétention de câble permet de réduire considérablement l'encombrement de l'ensemble coaxial, puisque :
- la longueur hors-tout, c'est-à-dire la distance entre l'extrémité avant du boitier et l'extrémité arrière de la jonction surmoulée peut être largement moindre que celle avec capot et joint(s) additionnel(s) ou tube de de protection à l'arrière des connecteurs selon l'état de l'art ;
- le diamètre de la jonction surmoulée peut être également bien diminué par rapport à un capot ou tube de protection rapporté et fixé mécaniquement sur le boitier du connecteur.

Enfin, la jonction surmoulée, qui peut épouser parfaitement les formes du boitier de connecteur et du câble coaxial qui en émerge, permet d'obtenir des performances d'étanchéité et de résistance aux contraintes mécaniques, très élevées.

Ces performances très élevées rendent un ensemble électrique selon l'invention parfaitement compatible aux normes USCAR et ISO du domaine de l'automobile.

### Brève description des figures

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente en vue de coupe longitudinale un connecteur coaxial droit selon le brevet US7510433 B2 ;
- la figure 2 représente en coupe longitudinale, un ensemble de connexion coaxial de forme coudée selon la demande de brevet US2018/0034172 ;
- la figure 3 représente en perspective, un ensemble de connexion coaxial de forme droite selon l'état de l'art ;
- la figure 3A est une vue de coupe longitudinale de la figure 3 ;
- la figure 4 représente en perspective, un exemple d'ensemble de connexion coaxial, de type mâle et de forme droite selon l'invention ;
- la figure 4A est une vue de coupe longitudinale de la figure 4;
- les figures 5A à 5D représentent en perspective les étapes de réalisation d'un ensemble de connexion coaxial selon l'invention, comme montré aux figures 4 et 4A ;
- la figure 6 représente en perspective, un exemple d'ensemble de connexion à paire torsadées de forme droite selon l'invention ;
- la figure 6A est une vue de coupe longitudinale de la figure 6;
- les figures 7A à 7G représentent en perspective les étapes de réalisation d'un exemple d'ensemble de connexion coaxial de forme coudée selon l'invention ;
- la figure 8 représente en perspective, un autre exemple d'ensemble de connexion coaxial, de type femelle et de forme droite selon l'invention.

### Description détaillée de l'invention

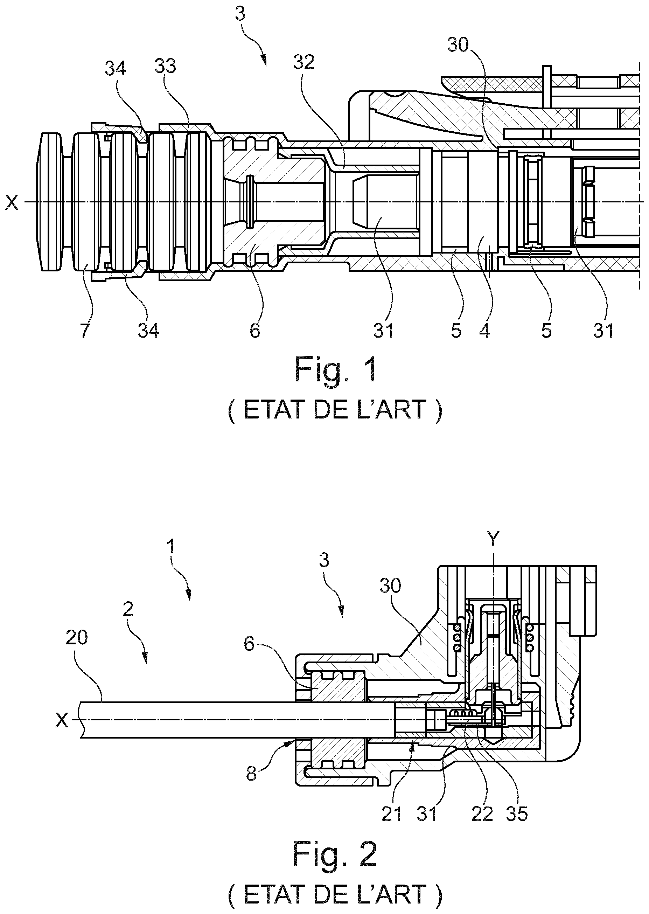

Les figures 1 à 3A relatives à des ensembles de connexion coaxiaux selon l'état de l'art ont déjà été commentées en préambule. Elles ne seront donc pas décrites ci-après.

Par souci de clarté, un même élément d'ensemble de connexion selon l'état de l'art et selon l'invention est désigné par une seule et même référence numérique.

On a représenté aux figures 4 et 4A un ensemble de connexion coaxial 1 de forme droite conforme à l'invention, comportant un câble coaxial 2 et un connecteur coaxial 3 qui s'étend selon un axe longitudinal X et qui est monté sur le câble coaxial 2. Dans cet exemple, le connecteur est de type mâle.

Le câble coaxial 2, comprend de manière usuelle, une gaine isolante extérieure 20 entourant de manière coaxiale, une tresse métallique de blindage 21 elle-même entourant un diélectrique 23 lui-même entourant le conducteur central 22.

Le connecteur coaxial 2 de forme droite comprend un boitier isolant 30 constitué d'une seule pièce de de forme allongée selon l'axe X, un contact extérieur 31 formant un contact de masse est monté et fixé dans le boitier 30, et un contact central 32 maintenu par un corps isolant 9 lui-même maintenu dans le contact extérieur 31.

Plus précisément, le contact extérieur 31 est monté dans le boitier 30 avec une portion 310 sertie autour de la gaine extérieure 20 du câble coaxial 2. En outre, une portion 311 du contact extérieur 31 est sertie autour de la tresse métallique 21 de blindage du câble 2 qui entoure le diélectrique 23 de ce dernier.

Le contact central 32 est monté à l'intérieur du contact extérieur 31 avec une portion 320 sertie autour de l'extrémité libre dénudée du conducteur central 22 du câble coaxial 2.

A l'intérieur du boitier 30, une enveloppe métallique 10 entoure, le contact central 32 et le contact extérieur 31 selon l'axe X, entre la partie tubulaire du contact extérieur 31 et sa portion 311 sertie autour de la tresse métallique 21 en formant une cavité C sensiblement fermée.

A l'avant du connecteur 3, un joint d'étanchéité 5 est monté dans le boitier 30, de sorte à réaliser l'étanchéité avec un connecteur complémentaire une fois leur connexion mutuelle réalisée.

Selon l'invention, pour assurer la protection mécanique et l'étanchéité sur la partie arrière 300 du boitier 30, une jonction 11 est surmoulée entre l'enveloppe 10 et la partie arrière 300 du boitier et entre la partie arrière 300 de boitier et une partie de la gaine 20 du câble coaxial en étant répartie autour de cette dernière et de la partie arrière du boitier.

Le surmoulage de la jonction 11 est réalisé selon un procédé à basse pression, typiquement inférieure à 10 bars avec une matière polymère qui permette une bonne accroche chimique compatible avec les matières constitutives à la fois de la gaine 20 du câble 2 et de celle du boitier 30 ainsi qu'une bonne accroche mécanique. Egalement, la matière de surmoulage présente des caractéristiques compatibles, en termes d'étanchéité et de résistance mécanique, aux normes USCAR et ISO de l'automobile. Par exemple, la matière surmoulée peut être un polyamide, de type polyamide 6/6.

Lors du process de surmoulage basse pression, l'enveloppe 10 sert de barrière physique pour empêcher la matière de surmoulage de venir pénétrer à l'intérieur de la cavité C.

Afin d'éviter toute intrusion non souhaitée de matière tout en remplissant parfaitement le volume visé, par la matière de surmoulage, les inventeurs ont mis en oeuvre avantageusement plusieurs mesures.

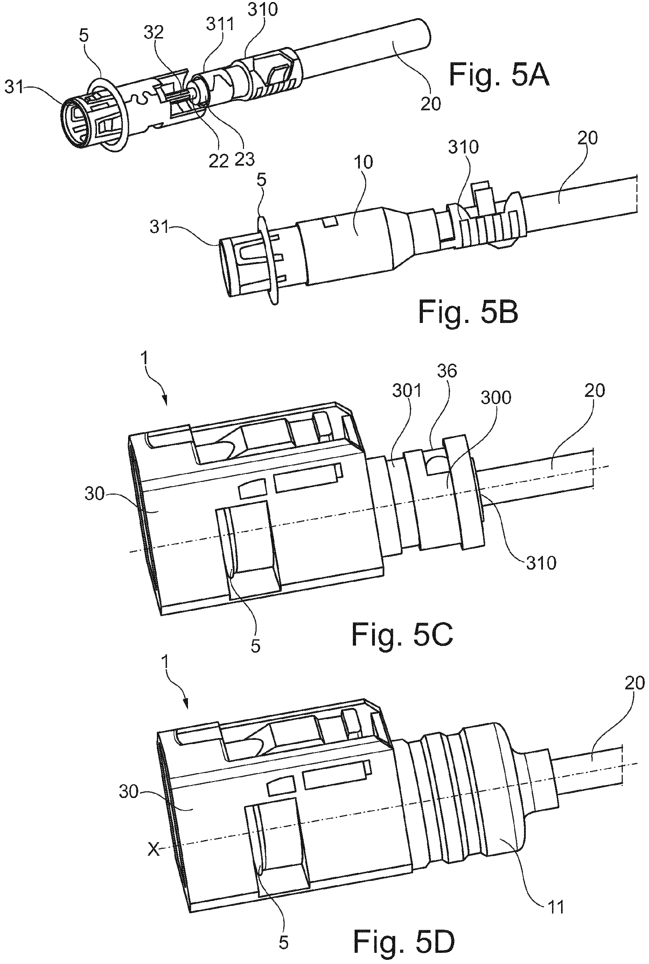

Tout d'abord, comme visible sur les figures 4A et 5C, ils ont réalisé des ouvertures traversantes 36 dans le boitier 30, ces ouvertures 36 formant en quelque sorte des évents pour chasser l'air lors de l'injection de la matière de surmoulage, afin que celle-ci vienne remplir et s'accrocher à l'intérieur et autour de la partie arrière 300 du boitier 30. Egalement, la présence d'une gorge annulaire 301 permet d'améliorer l'accroche sur la périphérie de la partie arrière 300 du boitier 30.

En outre, pour maîtriser parfaitement le remplissage du volume souhaité par la matière de surmoulage, les inventeurs ont mis en oeuvre le procédé à basse pression selon trois étapes consécutives comme suit.

Tout d'abord, une injection initiale de la matière polymère a été réalisée selon un remplissage partiel du volume final définissant la jonction surmoulée. De préférence, pour les dimensions des connecteurs selon l'invention, le temps de remplissage partiel peut être de moins de 10 secondes avec un volume partiel rempli équivalent à 60% du volume final.

Après un arrêt ou temps d'attente, typiquement d'environ 10 à 15 secondes, l'injection finale de la matière polymère a été réalisée, typiquement pendant 10 à 15 secondes, de sorte à compléter le volume final définissant la jonction surmoulée, soit une injection de l'ordre de 40% du volume final.

Comparativement à un ensemble de connexion droit 1 selon l'état de l'art comme illustré aux figures 3 et 3A, un ensemble selon l'invention présente une longueur hors-tout L entre l'extrémité avant du boitier 30 et l'extrémité arrière de la jonction 11, bien moindre que la longueur L0. Ce gain de longueur peut dépasser les 20%. De même, le diamètre maximal D de la jonction 11 peut être moindre que celui du capot de protection 8 des figures 3 et 3A.

Le procédé de réalisation d'un ensemble de connexion coaxial droit 1 peut être résumé comme suit:
- sertissage du contact extérieur 31 d'une part sur la gaine extérieure 20 du câble par la portion de sertissage 310 et d'autre part sur la tresse métallique de blindage 21 par la portion de sertissage 311 et sertissage du contact central 32 du connecteur 3 au conducteur central du câble 2 (figure 5A) ;
- sertissage de l'enveloppe 10 autour à la fois du contact central 32 et du contact extérieur 31 en définissant la cavité C sensiblement fermée autour du contact central 32 de sorte à limiter au mieux les fuites de signaux HF (figure 5B) ;
- montage et maintien mécanique du sous-ensemble serti autour du câble 2 à l'intérieur du boitier 30 (figure 5C) ;
- réalisation de la jonction de protection mécanique et d'étanchéité 11 par surmoulage basse pression (figure 5D).

La réalisation d'une jonction surmoulée 11 conforme à l'invention peut s'appliquer également à des connecteurs coudés, notamment des connecteurs coudés avec boitiers 3 en deux parties, i.e. un corps de boitier 37 appelé aussi « boitier de coding » et un manchon coudé 38 assemblé mécaniquement dans le corps 37, comme décrit par exemple dans US 8,182,285 de la Demanderesse.

On a représenté en figures 6 et 6A, un autre exemple d'ensemble de connexion selon l'invention. Ici, le câble électrique est constitué d'une paire de conducteurs centraux torsadés 22.1, 22.2, isolés chacun par un diélectrique. Une tresse métallique de blindage 21 entoure la paire de conducteurs torsadés 22.1, 22.2. Une gaine isolante extérieure 20 entoure la tresse de blindage 21.

Dans cet autre exemple, toujours pour assurer la protection mécanique et l'étanchéité sur la partie arrière 300 du boitier 30, une jonction 11 est surmoulée entre l'enveloppe 10 et la partie arrière 300 du boitier et entre la partie arrière 300 de boitier et une partie de la gaine 20 du câble à paire torsadés en étant répartie autour de cette dernière et de la partie arrière du boitier.

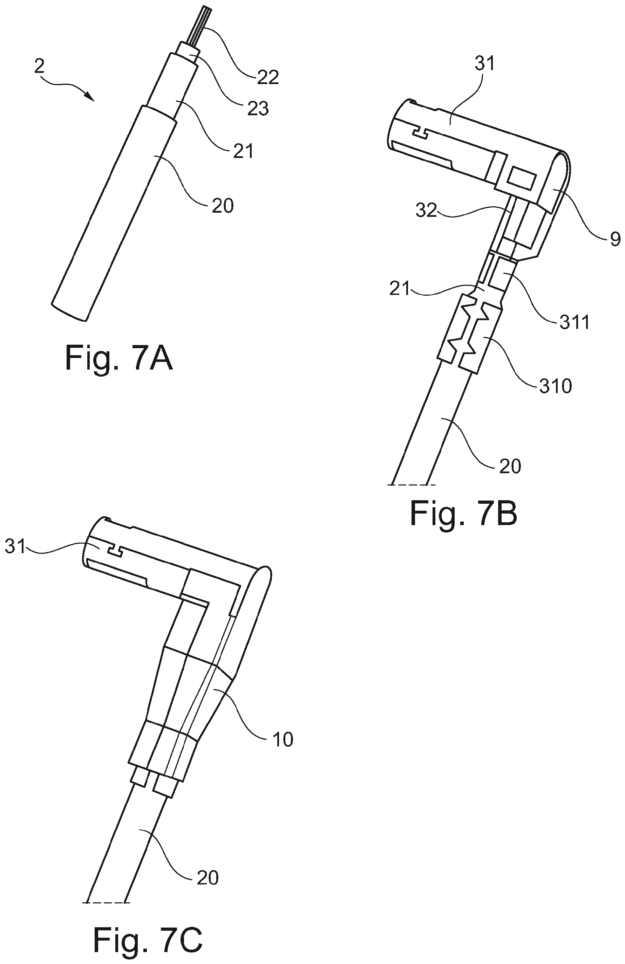

On décrit ainsi en référence aux figures 7A à 7G, la réalisation selon l'invention d'un exemple d'un ensemble 1 de forme coudée.

On dénude l'extrémité d'un conducteur central 22 d'un câble coaxial 2 en laissant apparent également sur une longueur suffisante la tresse métallique 21 (figure 7A).

Puis, on réalise le sertissage d'un contact extérieur coudé 31 d'une part sur la gaine extérieure 20 du câble par la portion de sertissage 310 et d'autre part sur la tresse métallique de blindage 21 par la portion de sertissage 311 et le sertissage du contact central 32 du connecteur 3 au conducteur central du câble 2 (figure 7B).

On fait ensuite le sertissage d'une enveloppe 10 autour à la fois du contact central 32 et du contact extérieur coudé 31 en définissant à nouveau une cavité C sensiblement fermée autour du contact central 32 de sorte à limiter au mieux les fuites de signaux HF (figure 7C).

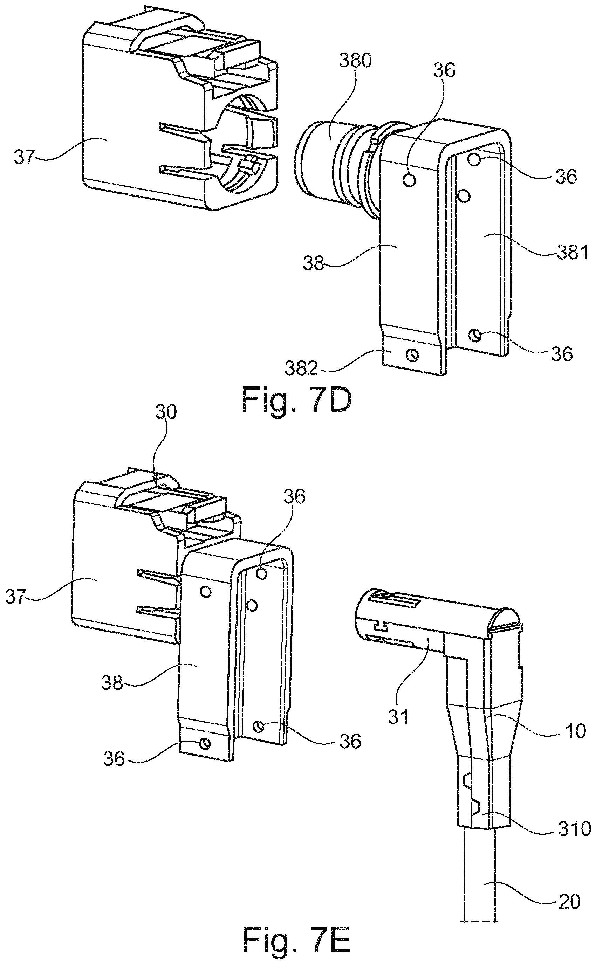

En parallèle, on réalise un boitier 30 (aussi appelé sous-ensemble) du connecteur par assemblage par encliquetage d'un manchon coudé 38 à l'intérieur d'un boitier de coding 37 de forme droite (figure 7D). Le boitier de coding 37 s'étend selon un axe longitudinal Y définissant avec l'axe X, l'angle du coude. Le manchon 38 comprend une partie tubulaire 380 selon l'axe Y et une cuvette 381 selon son axe longitudinal X, la cuvette ayant en forme générale de U en vue de dessus.

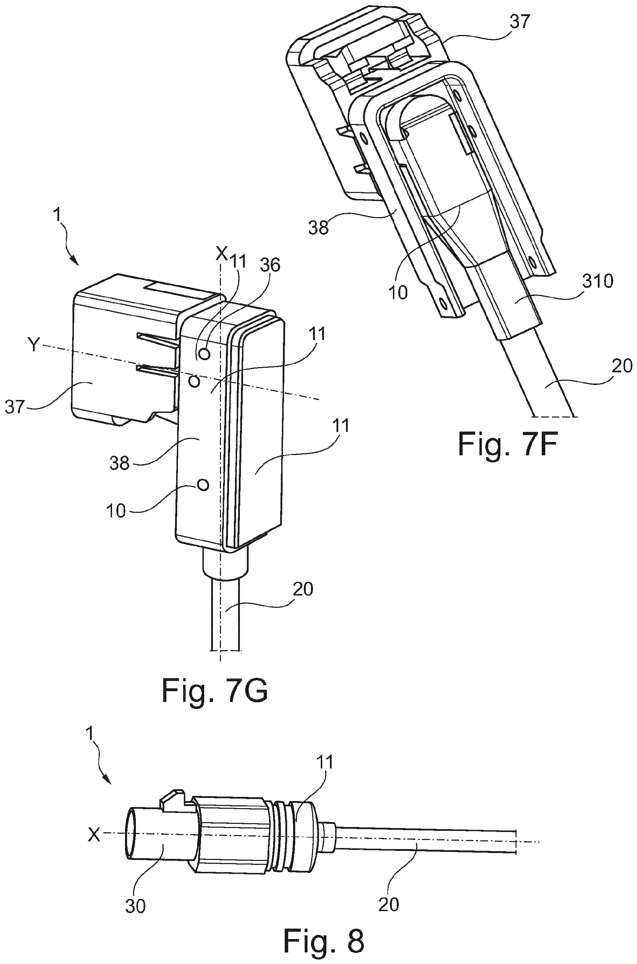

On vient alors loger et maintenir mécaniquement à la fois la partie droite du sous-ensemble sertie précédemment qui s'étend selon l'axe X à l'intérieur de la cuvette 381 en U du manchon 38 et l'autre partie droite du sous-ensemble qui s'étend selon l'axe Y dans la portion tubulaire 380 (figures 7E, 7F).

Puis, on vient finir l'ensemble coudé 1, en réalisant la jonction de protection mécanique et d'étanchéité 11 selon l'invention, par surmoulage basse pression (figure 7G).

Comme visible sur cette figure 7G, la jonction 11 est surmoulée entre l'enveloppe 10 et l'espace intérieur de la cuvette 381 du manchon en fermant celui-ci autour d'une partie de la gaine 20 du câble coaxial et la périphérie du manchon au niveau de gorges 382 dans le manchon 38. Tout comme pour l'ensemble de connexion de forme droite, on peut prévoir avantageusement de réaliser des ouvertures traversantes 36 formant des évents ainsi que des gorges 382 dans le manchon 38, afin de garantir de bien chasser l'air lors de l'injection de matière de surmoulage et de réaliser une bonne accroche mécanique par celle-ci.

La jonction de protection surmoulée et d'étanchéité 11 selon l'invention peut être appliquée à tous types de connecteurs droits ou coudés, en particulier à des types de connecteurs déjà commercialisés, notamment ceux de la Demanderesse sous la référence commerciale « R3C » de type femelle (figures 4, 4A, 5D, 7G), ou de type mâle (figure 8), mais aussi à des types de connecteurs à paires torsadées (figures 6, 6A).

Bien entendu, l'invention n'est pas limitée aux exemples de mise en oeuvre qui viennent d'être décrits.

D'autres variantes et améliorations peuvent être envisagées sans pour autant sortir du cadre de l'invention.

Par exemple, tout profil de jonction surmoulée, différent de ceux illustrés, peut être envisagé à partir d'un procédé de surmoulage basse pression.

Bien que n'apparaissant pas sur les figures, l'invention permet également d'utiliser des boitiers universels en une seule pièce pour les connecteurs de forme droite, ou constitués de deux pièces (manchon et boitier de coding) pour les connecteurs de forme coudée. Ces boitiers universels peuvent parfaitement respecter le codage par couleurs et système de détrompage pour les applications du domaine de l'automobile, selon lequel une combinaison de couleurs permet une connexion unique entre un connecteur de type mâle et un connecteur de type femelle pour une même nature de connexion (protocole GPS, sans fil comme le Bluetooth^{®}, diffusion audio numérique (en anglais « Digital Audio Broadcasting » d'acronyme DAB, Wifi, ADAS, ...).

## Revendications

1. Ensemble (1) de connexion électrique comprenant:
- un câble électrique (2) comprenant:
• au moins un conducteur central (22, 22.1, 22.2),
• une gaine extérieure (20) isolante électrique, entourant l'au moins un conducteur central;
- un connecteur électrique (3) comprenant :
• un boitier (30)
• un contact extérieur (31) s'étendant suivant au moins un axe longitudinal (X), le contact extérieur étant monté dans le boitier (30),
• au moins un contact central (32) s'étendant au moins selon l'axe longitudinal (X), l'au moins un contact central étant monté à l'intérieur du contact extérieur avec interposition d'un corps isolant électrique (9), l'au moins un contact central étant pourvu d'au moins une portion (320) sertie autour de l'extrémité libre dénudée de l'au moins un conducteur central du câble,
• une enveloppe électriquement conductrice (10) entourant à l'intérieur du boitier, l'au moins un contact central et le contact extérieur au moins sur la longueur, selon l'axe X, de la portion sertie autour de l'extrémité libre sertie de l'au moins un conducteur central en formant une cavité (C) quasiment ou complètement fermée ; l'ensemble étant **caractérisé en ce qu'**il comprend de plus:
- une jonction d'étanchéité (11) et de rétention mécanique surmoulée à la fois entre l'enveloppe et une partie (300 ou 382) du boitier, entre la partie (300 ou 382) de boitier et une partie de la gaine du câble , et autour de la partie (300 ou 382) de boitier et de la partie de la gaine du câble.

2. Ensemble de connexion électrique selon la revendication 1, le câble et le connecteur étant coaxiaux.

3. Ensemble de connexion électrique selon la revendication 1, le câble étant constitué d'une ou plusieurs paires de conducteurs centraux torsadés.

4. Ensemble de connexion électrique selon la revendication 1, la cavité étant exempte de la matière de la jonction surmoulée.

5. Ensemble de connexion électrique selon la revendication 1 ou 2, la partie du boitier comprenant une ou plusieurs ouvertures débouchantes remplies complètement par la jonction surmoulée.

6. Ensemble de connexion électrique selon l'une des revendications précédentes, dans lequel :
- le câble électrique comprend autour d'au moins un conducteur central, un diélectrique (23) et une tresse métallique de blindage (21) entourant le diélectrique et entourée de la gaine extérieure ;
- le contact extérieur comprend une portion (310) sertie autour de la gaine extérieure (20) du câble et/ou une portion (311) sertie autour de la tresse métallique du câble;
- l'enveloppe (10) entoure le contact central et le contact extérieur également sur la longueur de la portion sertie autour de la tresse métallique.

7. Ensemble de connexion électrique selon l'une des revendications précédentes, le contact extérieur étant formé par une seule et même pièce obtenue par découpage-roulage d'une bande métallique.

8. Ensemble de connexion électrique selon l'une des revendications précédentes, l'enveloppe étant formée par une seule et même pièce obtenue par découpage-roulage d'une bande métallique.

9. Ensemble de connexion électrique selon l'une des revendications précédentes, dans lequel :
- le boitier du connecteur est constitué par une seule pièce de forme droite allongée selon l'axe longitudinal (X) ;
- la jonction est surmoulée entre l'enveloppe et la partie arrière du boitier et entre la partie arrière de boitier et une partie de la gaine du câble électrique en étant répartie autour de cette dernière et de la partie arrière du boitier.

10. Ensemble de connexion électrique selon l'une des revendications 1 à 8, dans lequel :
- le connecteur est de forme coudée selon un coude entre l'axe longitudinal (X) et un autre axe longitudinal (Y), de préférence à 90° l'un de l'autre ;
- le boitier du connecteur comprenant :
• un boitier de codage (37) s'étendant selon l'autre axe longitudinal (Y),
• un manchon coudé (38) selon la même forme coudée que celle du connecteur, le manchon étant assemblé avec le corps de boitier, le manchon logeant l'enveloppe;
- la jonction est surmoulée entre l'enveloppe et l'espace intérieur du manchon en fermant celui-ci autour d'une partie de la gaine du câble électrique.

11. Ensemble de connexion électrique selon la revendication 10, le manchon étant assemblé avec le boitier de codage selon une liaison pivot autour de l'autre axe (Y).

12. Procédé de réalisation d'un ensemble de connexion comprenant les étapes suivantes :
a/ fournir un ensemble de connexion électrique (1) comprenant :
- un câble électrique (2) comprenant:
• au moins un conducteur central (22 ; 22.1, 22.2),
• une gaine extérieure (20) isolante électrique, entourant l'au moins un conducteur central;
- un connecteur électrique (3) comprenant :
• un boitier (30);
• un contact extérieur (31) s'étendant suivant au moins un axe longitudinal (X), le contact extérieur étant monté dans le boitier,
• au moins un contact central (32) s'étendant au moins selon l'axe longitudinal (X), l'au moins un contact central étant monté à l'intérieur du contact extérieur avec interposition d'un corps isolant électrique (9), l'au moins un contact central étant pourvu d'au moins une portion sertie autour de l'extrémité libre dénudée de l'au moins un conducteur central du câble,
• une enveloppe électriquement conductrice (10) entourant à l'intérieur du boitier, l'au moins un contact central et le contact extérieur au moins sur la longueur, selon l'axe X, de la portion sertie autour de l'extrémité libre sertie de l'au moins un conducteur central en formant une cavité (C) quasiment ou complètement fermée ; le procédé étant **caractérisé en ce qu'**il comprend l'étape supplémentaire:
b/ réaliser un surmoulage d'au moins une matière polymère, selon une technique dite de surmoulage à basse pression, à la fois entre l'enveloppe et une partie du boitier, entre la partie de boitier et une partie de la gaine du câble, et autour de la partie de boitier et de la partie de la gaine du câble.

13. Procédé selon la revendication 12, l'étape b/ étant réalisée de sorte que la cavité soit exempte de la matière polymère de surmoulage.

14. Procédé selon la revendication 12 ou 13, l'étape b/ étant réalisée comme suit :
b1/ injection initiale de la matière polymère selon un remplissage partiel du volume final définissant la jonction surmoulée ;
b2/ arrêt de l'injection selon b1/ ;
b3/ injection finale de la matière polymère de sorte à compléter le volume final définissant la jonction surmoulée.

## Patentansprüche

1. Baugruppe (1) zur elektrischen Verbindung, umfassend:
- ein elektrisches Kabel (2), das Folgendes umfasst:
• mindestens einen Mittelleiter (22, 22.1, 22.2),
• einen elektrisch isolierenden Außenmantel (20), der den mindestens einen Mittelleiter umgibt;
- einen elektrischen Verbinder (3), der Folgendes umfasst:
• ein Gehäuse (30),
• einen Außenkontakt (31), der sich entlang mindestens einer Längsachse (X) erstreckt, wobei der Außenkontakt im Gehäuse (30) montiert ist,
• mindestens einen Mittelkontakt (32), der sich zumindest entlang der Längsachse (X) erstreckt, wobei der mindestens eine Mittelkontakt im Inneren des Außenkontakts mit einem dazwischen befindlichen elektrisch isolierenden Körper (9) montiert ist, wobei der mindestens eine Mittelkontakt mit mindestens einem Abschnitt (320) versehen ist, der um das freigelegte freie Ende des mindestens einen Mittelleiters des Kabels gecrimpt ist,
• eine elektrisch leitende Umhüllung (10), die das Innere des Gehäuses, den mindestens einen Mittelkontakt und den Außenkontakt zumindest über die Länge entlang der X-Achse des um das gecrimpte freie Ende des mindestens einen Mittelleiters gecrimpten Abschnitts umgibt und dabei einen nahezu oder vollständig geschlossenen Hohlraum (C) bildet;
wobei die Baugruppe **dadurch gekennzeichnet ist, dass** sie ferner Folgendes umfasst:
- eine Verbindung (11) zur Abdichtung und zum mechanischen Rückhalt, die sowohl zwischen der Umhüllung und einem Teil (300 oder 382) des Gehäuses als auch zwischen dem Teil (300 oder 382) des Gehäuses und einem Teil des Kabelmantels und um den Teil (300 oder 382) des Gehäuses und den Teil des Kabelmantels herum aufgeformt ist.

2. Baugruppe zur elektrischen Verbindung nach Anspruch 1, wobei das Kabel und der Verbinder koaxial sind.

3. Baugruppe zur elektrischen Verbindung nach Anspruch 1, wobei das Kabel aus einem oder mehreren Paaren verdrillter zentraler Leiter gebildet ist.

4. Baugruppe zur elektrischen Verbindung nach Anspruch 1, wobei der Hohlraum frei vom Material der aufgeformten Verbindung ist.

5. Baugruppe zur elektrischen Verbindung nach Anspruch 1 oder 2, wobei der Teil des Gehäuses eine oder mehrere Durchgangsöffnungen umfasst, die durch die aufgeformte Verbindung vollständig ausgefüllt werden.

6. Baugruppe zur elektrischen Verbindung nach einem der vorangehenden Ansprüche, wobei:
- das elektrische Kabel um mindestens einen Mittelleiter herum ein Dielektrikum (23) und ein metallisches Abschirmgeflecht (21), das das Dielektrikum umgibt und vom Außenmantel umgeben ist, umfasst;
- der Außenkontakt einen um den Außenmantel (20) des Kabels gecrimpten Abschnitt (310) und/oder einen um das metallische Geflecht des Kabels gecrimpten Abschnitt (311) umfasst;
- die Umhüllung (10) den Mittelkontakt und den Außenkontakt auch über die Länge des gecrimpten Abschnitts um das metallische Geflecht herum umgibt.

7. Baugruppe zur elektrischen Verbindung nach einem der vorangehenden Ansprüche, wobei der Außenkontakt aus einem einzigen, durch Schneiden und Walzen eines Metallstreifens erhaltenen Stück gebildet ist.

8. Baugruppe zur elektrischen Verbindung nach einem der vorangehenden Ansprüche, wobei die Umhüllung aus einem einzigen, durch Schneiden und Walzen eines Metallstreifens erhaltenen Stück gebildet ist.

9. Baugruppe zur elektrischen Verbindung nach einem der vorangehenden Ansprüche, wobei:
- das Gehäuse des Verbinders aus einem einzigen Stück mit gerader Form gebildet ist, das entlang der Längsachse (X) länglich ist;
- die Verbindung zwischen der Umhüllung und dem hinteren Teil des Gehäuses und zwischen dem hinteren Teil des Gehäuses und einem Teil des Mantels des elektrischen Kabels aufgeformt ist, wobei sie um den Mantel und den hinteren Teil des Gehäuses herum verteilt ist.

10. Baugruppe zur elektrischen Verbindung nach einem der Ansprüche 1 bis 8, wobei:
- der Verbinder eine abgewinkelte Form entlang eines Bogens zwischen der Längsachse (X) und einer weiteren Längsachse (Y), vorzugsweise im 90°-Winkel zueinander, aufweist;
- das Gehäuse des Verbinders Folgendes umfasst:
• ein Codiergehäuse (37), das sich entlang der weiteren Längsachse (Y) erstreckt,
• eine Hülse (38), die in der gleichen abgewinkelten Form wie der des Verbinders abgewinkelt ist, wobei die Hülse mit dem Körper des Gehäuses verbunden ist, wobei die Hülse die Umhüllung aufnimmt;
- die Verbindung zwischen der Umhüllung und dem Innenraum der Hülse aufgeformt ist, wobei die Hülse um einen Teil des Mantels des elektrischen Kabels herum geschlossen ist.

11. Baugruppe zur elektrischen Verbindung nach Anspruch 10, wobei die Hülse mit dem Codiergehäuse über eine Drehverbindung um die weitere Achse (Y) verbunden ist.

12. Verfahren zur Herstellung einer Verbindungsbaugruppe, umfassend die folgenden Schritte:
a/ Bereitstellen einer Baugruppe zur elektrischen Verbindung (1), die Folgendes umfasst:
- ein elektrisches Kabel (2), das Folgendes umfasst:
• mindestens einen Mittelleiter (22; 22.1, 22.2),
• einen elektrisch isolierenden Außenmantel (20), der den mindestens einen Mittelleiter umgibt;
- einen elektrischen Verbinder (3), der Folgendes umfasst:
• ein Gehäuse (30);
• einen Außenkontakt (31) der sich entlang mindestens einer Längsachse (X) erstreckt, wobei der Außenkontakt im Gehäuse montiert ist,
• mindestens einen Mittelkontakt (32), der sich zumindest entlang der Längsachse (X) erstreckt, wobei der mindestens eine Mittelkontakt im Inneren des Außenkontakts mit einem dazwischen befindlichen elektrisch isolierenden Körper (9) montiert ist, wobei der mindestens eine Mittelkontakt mit mindestens einem Abschnitt versehen ist, der um das freigelegte freie Ende des mindestens einen Mittelleiters des Kabels gecrimpt ist,
• eine elektrisch leitende Umhüllung (10), die das Innere des Gehäuses, den mindestens einen zentralen Kontakt und den Außenkontakt zumindest über die Länge entlang der X-Achse des um das gecrimpte freie Ende des mindestens einen zentralen Leiters gecrimpten Abschnitts umgibt und dabei einen nahezu oder vollständig geschlossenen Hohlraum (C) bildet;
wobei das Verfahren **dadurch gekennzeichnet ist, dass** es den folgenden zusätzlichen Schritt umfasst:
b/ Aufformen mindestens eines polymeren Materials nach einer als Niederdruckspritzguss bezeichneten Technik sowohl zwischen der Umhüllung und einem Teil des Gehäuses als auch zwischen dem Teil des Gehäuses und einem Teil des Kabelmantels und um den Teil des Gehäuses und den Teil des Kabelmantels herum.

13. Verfahren nach Anspruch 12, wobei der Schritt b/ so ausgeführt wird, dass der Hohlraum frei vom polymeren Aufformmaterial ist.

14. Verfahren nach Anspruch 12 oder 13, wobei der Schritt b/ wie folgt ausgeführt wird:
b1/ anfängliches Einspritzen des polymeren Materials gemäß einer partiellen Füllung des Endvolumens, das die aufgeformte Verbindung definiert;
b2/ Stoppen des Einspritzens nach b1/;
b3/ endgültiges Einspritzen des polymeren Materials, um das Endvolumen, das die aufgeformte Verbindung definiert, abzuschließen.

## Claims

1. Electrical connection assembly (1) comprising:
- an electric cable (2) comprising:
• at least one central conductor (22, 22.1, 22.2);
• an electrically insulating outer sheath (20) surrounding the at least one central conductor;
- an electrical connector (3) comprising:
• a housing (30);
• an outer contact (31) extending along at least one longitudinal axis (X), the outer contact being mounted in the housing (30);
• at least one central contact (32) extending at least along the longitudinal axis (X), the at least one central contact being mounted inside the outer contact with interposition of an electrically insulating body (9), the at least one central contact being provided with at least one segment (320) that is crimped around the bared free end of the at least one central conductor of the cable;
• an electrically conductive jacket (10) surrounding, inside the housing, the at least one central contact and the outer contact at least over the length, along the axis X, of the segment that is crimped around the crimped free end of the at least one central conductor, thereby forming a cavity (C) that is practically or fully closed;
the assembly being **characterized in that** it additionally comprises:
- a sealing and mechanical retention joint (11) overmoulded both between the jacket and a portion (300 or 382) of the housing, between the housing portion (300 or 382) and a portion of the sheath of the cable, and around the housing portion (300 or 383) and the portion of the sheath of the cable.

2. Electrical connection assembly according to Claim 1, the cable and the connector being coaxial.

3. Electrical connection assembly according to Claim 1, the cable being formed by one or more pairs of twisted central conductors.

4. Electrical connection assembly according to Claim 1, the cavity being devoid of the material of the overmoulded joint.

5. Electrical connection assembly according to Claim 1 or 2, the portion of the housing comprising one or more through-openings completely filled by the overmoulded joint.

6. Electrical connection assembly according to one of the preceding claims, wherein:
- the electric cable comprises, around at least one central conductor, a dielectric (23) and a metal screening braid (21) surrounding the dielectric and surrounded by the outer sheath;
- the outer contact comprises a segment (310) that is crimped around the outer sheath (20) of the cable and/or a segment (311) that is crimped around the metal braid of the cable;
- the jacket (10) also surrounds the central contact and the outer contact over the length of the segment that is crimped around the metal braid.

7. Electrical connection assembly according to one of the preceding claims, the outer contact being formed by the one and the same part that is obtained by cutting and rolling a metal strip.

8. Electrical connection assembly according to one of the preceding claims, the jacket being formed by the one and the same part that is obtained by cutting and rolling a metal strip.

9. Electrical connection assembly according to one of the preceding claims, wherein:
- the housing of the connector is formed by a single straight part that is elongate along the longitudinal axis (X);
- the joint is overmoulded between the jacket and the rear portion of the housing and between the rear housing portion and a portion of the sheath of the electric cable, being distributed around said sheath portion and around the rear portion of the housing.

10. Electrical connection assembly according to one of Claims 1 to 8, wherein:
- the connector is elbow shaped with an elbow between the longitudinal axis (X) and another longitudinal axis (Y), preferably at 90° to each other;
- the housing of the connector comprising:
• a coding housing (37) extending along the other longitudinal axis (Y);
• a curved sleeve (38) with the same curved shape as that of the connector, the sleeve being assembled with the housing body, the sleeve housing the jacket;
- the joint is overmoulded between the jacket and the inner space of the sleeve, thereby closing said sleeve around a portion of the sheath of the electric cable.

11. Electrical connection assembly according to Claim 10, the sleeve being assembled with the coding housing along a pivot connection pivoting about the other axis (Y) .

12. Method for producing a connection assembly, comprising the following steps:
a/ supplying an electrical connection assembly (1) comprising:
- an electric cable (2) comprising:
• at least one central conductor (22, 22.1, 22.2);
• an electrically insulating outer sheath (20) surrounding the at least one central conductor;
- an electrical connector (3) comprising:
• a housing (30);
• an outer contact (31) extending along at least one longitudinal axis (X), the outer contact being mounted in the housing;
• at least one central contact (32) extending at least along the longitudinal axis (X), the at least one central contact being mounted inside the outer contact with interposition of an electrically insulating body (9), the at least one central contact being provided with at least one segment that is crimped around the bared free end of the at least one central conductor of the cable;
• an electrically conductive jacket (10) surrounding, inside the housing, the at least one central contact and the outer contact at least over the length, along the axis X, of the segment that is crimped around the crimped free end of the at least one central conductor, thereby forming a cavity (C) that is practically or fully closed;
the method being **characterized in that** it comprises the additional step of:
b/ performing overmoulding of at least one polymer material, using a technique called low pressure overmoulding, both between the jacket and a portion of the housing, between the housing portion and a portion of the sheath of the cable, and around the housing portion and the portion of the sheath of the cable.

13. Method according to Claim 12, the step b/ being implemented in such a way that the cavity is devoid of the overmoulding polymer material.

14. Method according to Claim 12 or 13, the step b/ being implemented as follows:
b1/ initial injection of the polymer material to partially fill the final volume defining the overmoulded joint;
b2/ stopping the injection as per b1/;
b3/ final injection of the polymer material, so as to complete the final volume defining the overmoulded joint.
